# FASCICULE DE BREVET EUROPEEN

(11) **EP 3 005 507 B1**
(45) Date de publication et mention de la délivrance du brevet: **05.04.2017**
(21) Numéro de dépôt: 14727873.3
(22) Date de dépôt: 30.04.2014
(51) Int. Cl.: H02G 9/02, B60L 11/18, H02G 5/00, H02G 3/04, H01B 7/00, H01B 7/08, H02G 9/04, H02G 5/04

(54) **ENSEMBLE D'ALIMENTATION DESTINE A LA RECHARGE DE BATTERIES ELECTRIQUES DE VEHICULES AUTOMOBILES ELECTRIQUES**
STROMVERSORGUNGSEINRICHTUNG ZUM WIEDERAUFLADEN ELEKTRISCHER BATTERIEN FÜR ELEKTRISCHE FAHRZEUGE
POWER SUPPLY ASSEMBLY INTENDED TO RECHARGE ELECTRIC BATTERIES FOR ELECTRIC MOTOR VEHICLES

(30) Priorité: 31.05.2013 FR 1354986
(43) Date de publication de la demande: 13.04.2016
(73) Titulaire: Nexans, 75008 Paris (FR)
(72) Inventeur: BOIS, Reynald, F-51100 Reims (FR); LEON ROMERO, Antonio, B-1800 Vilvoorde (BE); CHEENNE, Annie, F-61100 La Selle La Forge (FR); SABLON, Mickaël, F-08200 Sedan (FR); ROTTIERS, Kristof, B-9340 Lede (BE)
(74) Mandataire: Lenne, Laurence
(86) Numéro de dépôt international: PCT/FR2014/051034
(87) Numéro de publication internationale: WO 2014/191644

(56) Documents cités:
- WO-A1-2012/169040
- US-A- 3 715 627
- Anonymous: "Betobar-r catalog CAST-RESIN INSULATED BUSWAY SYSTEMS", Eta-com group , 20 octobre 2006 (2006-10-20), page 58pp, XP055100037, Extrait de l'Internet: URL:http://www.scanelec.no/uploads/Produkt er/fullisolertestromskinner/kataloger/Prod uktkatalog2007.pdf [extrait le 2014-02-03]

## Description

L'invention concerne un ensemble d'alimentation destiné à la recharge de batteries électriques de plusieurs véhicules automobile électriques.

Un ensemble d'alimentation destiné à la recharge de batteries électriques de plusieurs véhicules automobiles électriques comportant une pluralité de dispositifs d'alimentation électrique comportant chacun un dispositif de transmission d'électricité destinés à être posé sur le sol avec un agencement conducteur disposé dans ledit dispositif de transmission d'électricité et comportant au moins un poteau supportant une borne d'alimentation et disposé sur lesdits dispositifs de transmission d'électricité est décrit dans le document de brevet WO 2012/169040.

Le catalogue "Betobar®-r CAST-RESIN INSULATED BUSWAY SYSTEMS" Review 6 d.d.09.06 décrit des dispositifs d'alimentation en électricité sous forme de barres rectangulaires ou trapézoïdales faites de matière isolante contenant des jeux de barres omnibus.

Un ensemble d'alimentation en électricité de véhicules automobiles est décrit dans le document de brevet WO 2010/114455.

Cet ensemble d'alimentation destiné à la recharge de batteries électriques de plusieurs véhicules comportent des bornes supportés chacune par un poteau ancré dans le sol et un agencement de protection inférieur recouvrant les câbles électriques disposés sur le sol. Ce dispositif de protection inférieur est en matériau résistant mécaniquement et comporte plusieurs modules assemblés.

Ce type de dispositif pose plusieurs problèmes techniques.

Son montage est relativement long et complexe. Un module de dispositif de protection formant également la base d'un poteau intérieur est mis en place et fixé au sol, ce poteau intérieur étant ancré dans le sol. Il faut alors pousser les câbles dans ce dispositif de protection ainsi qu'entre le poteau intérieur et un poteau extérieur coulissant supportant la borne. Cette opération doit être répétée selon le nombre de bornes à installer. Il est en fait relativement peu évolutif.

Ce dispositif connu peut présenter également des problèmes d'étanchéité. En effet, de l'eau peut s'introduire tout autant à l'intérieur des dispositifs de protection inférieurs qu'entre les poteaux intérieurs et extérieurs. Les câbles électriques doivent donc être individuellement bien isolés.

L'invention résout ces problèmes en proposant un ensemble d'alimentation destiné à la recharge de batteries électriques de plusieurs véhicules automobiles électriques qui soit particulièrement simple d'installation tout en présentant une totale sécurité mécanique et électrique.

Pour ce faire, l'invention propose un ensemble d'alimentation destiné à la recharge de batteries électriques de plusieurs véhicules automobiles électriques comportant une pluralité de dispositifs d'alimentation comportant chacun un dispositif de transmission d'électricité destiné à être posé sur le sol avec un agencement conducteur disposé dans ledit dispositif de transmission d'électricité et comportant au moins un poteau supportant une borne d'alimentation et disposé sur lesdits dispositifs de transmission d'électricité caractérisé en ce que :
- chaque dit dispositif de transmission d'électricité est constitué d'un ensemble de bandes conductrices enrobées dans une barre en matière isolante électriquement,
- ladite barre présente à chacune de ces extrémités un prolongement perpendiculaire à l'extrémité duquel lesdites bandes conductrices sont accessibles, ladite barre et ses dits prolongements formant une structure en U dont la barre sensiblement horizontale est la base pourvue d'agencements de fixation au sol et les prolongements verticaux sensiblement verticaux sont les branches,
- lesdites bandes conductrices sont accessibles à l'extrémité libre desdits prolongements,
- chaque dispositif d'alimentation est adjacent à au moins un autre dispositif d'alimentation et les dits prolongements perpendiculaires adjacents de ces dispositifs d'alimentation sont connectés électriquement ensemble et à une borne d'alimentation commune correspondante.

Le dispositif de transmission d'électricité permet de transmettre de l'électricité basse tension destinée à la charge de la batterie d'un véhicule automobile électrique mais aussi peut permettre de transmettre des données diverses, assurant par exemple une communication d'informations à l'usager ou une commande par l'usager d'une heure ou d'un laps de temps de charge, et également une télémaintenance vers une unité centrale en cas de borne défectueuse par exemple.

Par ailleurs, l'ensemble conforme à l'invention ne nécessite aucun travail d'excavation ou de génie civil équivalent.

Cet ensemble est totalement évolutif et peut être développé à volonté. Il peut être développé en ligne droite, en étoile ou en ligne courbe. Il ne nécessite pas un terrain parfaitement plat et s'adapte donc à tout sol. Il est résistant aux produits polluants tels que les hydrocarbures ou les solvants, résistant aux chocs et résistant au feu.

Selon un mode de réalisation préféré, lesdits prolongements perpendiculaires adjacents sont recouverts par ledit poteau chapeautant les dits prolongements et disposé sous ladite borne.

De préférence, ladite barre est de section trapézoïdale, sa plus grande face étant destinée à être disposée sur le sol ou équivalent.

Elle peut également être de forme différente, assurant la possibilité de roulement d'un véhicule sans dégât. A titre d'exemple, elle peut présenter une section en forme de demi-cercle.

Ladite barre a de préférence une longueur comprise entre 2 et 3 mètres.

De préférence, une bande de neutre et/ou de terre longitudinale enrobée dans ladite barre recouvre lesdites bandes de phases longitudinales.

Selon un premier mode de réalisation particulier, au moins un desdits prolongements perpendiculaires présente une cavité cylindrique droite.

Par ailleurs, au moins un desdits prolongements perpendiculaires peut présenter un cylindre droit.

Avantageusement, dans ce cas, le rayon dudit cylindre et de ladite cavité est identique.

Selon un second mode de réalisation particulier, deux dits prolongement perpendiculaires présentant une cavité cylindrique droite sont assemblés ensemble par l'intermédiaire d'un élément tubulaire de même rayon, encastré dans chacune desdites cavités cylindriques droites.

Ces caractéristiques permettent une grande facilité de positionnement, en assurant un débattement angulaire entre dispositifs.

L'invention est décrite ci-après plus en détail à l'aide de figures représentant des modes de réalisation préférés de l'invention.
Les figures 1 et 2 sont des vues en perspective de deux dispositifs d'alimentation en électricité conforme à l'invention, selon un premier mode de réalisation.
Les figures 3A et 3B sont des vues en coupe de deux variantes de ce dispositif d'alimentation en électricité.
La figure 4 est une vue en perspective d'un ensemble d'alimentation conforme à l'invention correspondant.
La figure 5 est une vue partielle en perspective de deux dispositifs d'alimentation en électricité conforme à l'invention, selon un deuxième mode de réalisation.
Les figures 6 et 7 sont des vues partielles en perspective d'un ensemble d'alimentation correspondant.
La figure 8 est une vue partielle en perspective de deux dispositifs d'alimentation en électricité conforme à l'invention, selon un troisième mode de réalisation.
La figure 9 est une vue partielle de dessus d'un ensemble d'alimentation correspondant.

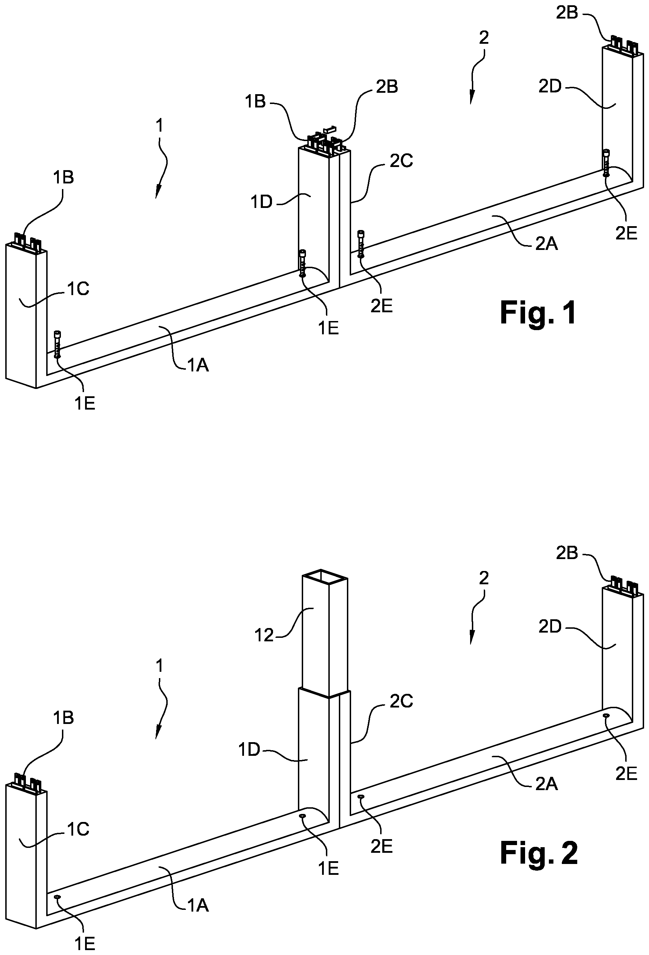

Comme illustré sur la figure 1 où deux dispositifs d'alimentation en électricité à basse tension conforme à l'invention sont représentés, un dispositif d'alimentation en électricité 1 ou 2, destiné en particulier à la recharge de batteries électriques d'un véhicule, comporte un dispositif de transmission d'électricité 1A, 2A destiné à être posé sur le sol ou équivalent avec un agencement conducteur disposé dans ce dispositif de transmission.

Ce dispositif de transmission d'électricité 1A, 2A est constitué d'un ensemble de bandes conductrices 1 B, 2B enrobées dans une barre en matière isolante électriquement, les bandes conductrices 1 B, 2B étant accessibles aux deux extrémités de la barre correspondante.

Plus précisément, la barre 1A, 2A présente à chacune de ces extrémités un prolongement 1C, 1D, 2C, 2D perpendiculaire à l'extrémité duquel les bandes conductrices 1 B, 2B sont accessibles.

La barre est pourvue d'agencement de fixation au sol ou équivalent, avantageusement d'orifices traversants 1 E, 2E destinés à recevoir des vis ou tenons d'ancrage introduits dans le sol ou équivalent.

De préférence, les bandes conductrices 1 B, 2B sont en cuivre ou en aluminium et elles sont enrobées dans une résine isolante classiquement utilisée pour les barres omnibus électriques couramment appelées « busbars ». La section des bandes conductrices est déterminée en fonction du nombre de places maximal de l'ensemble complet d'alimentation, qui sera décrit plus loin.

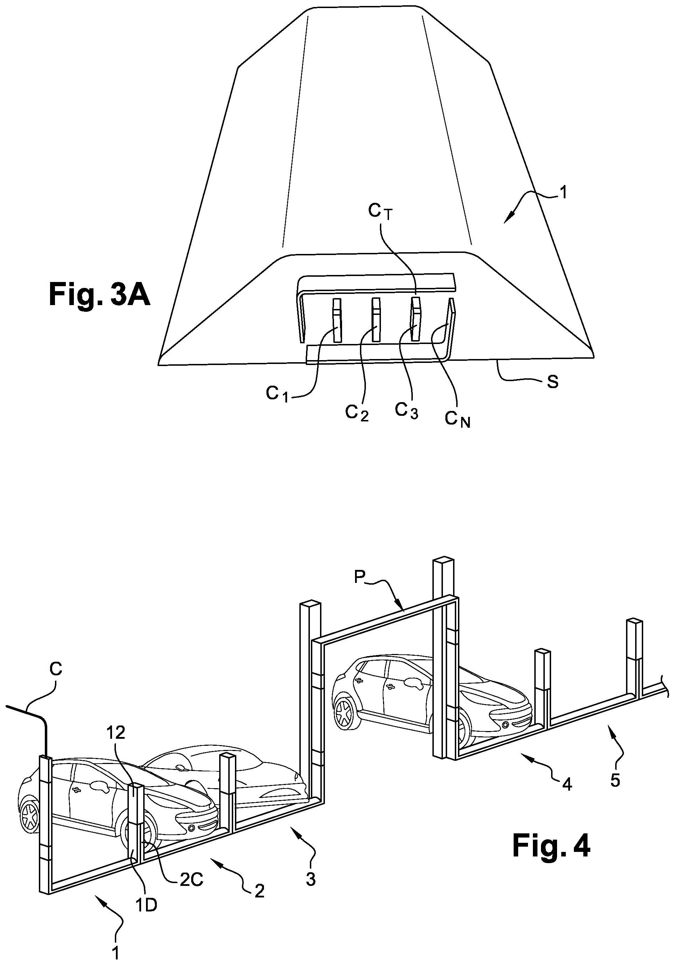

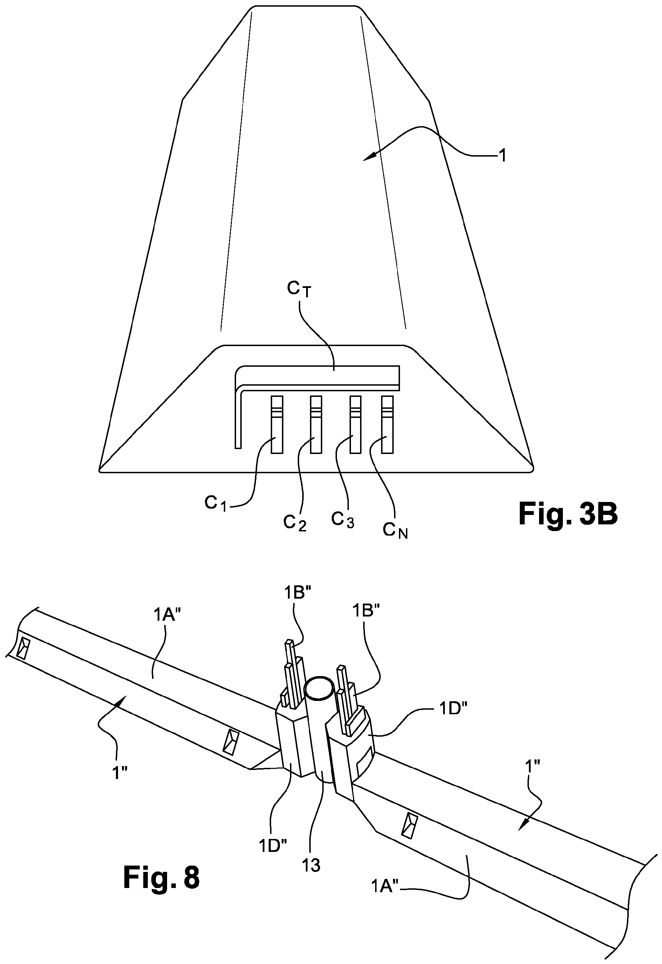

Une telle barre présente une solidité mécanique permettant d'éviter son endommagement, en cas de roulement d'un véhicule sur celle-ci, par exemple. Pour ce faire, comme visible sur la figure 3, la barre est de préférence de section trapézoïdale, sa plus grande face S étant destinée à être disposée sur le sol ou équivalent.

De plus, elle présente toute sécurité pour les tiers, en cas de choc avec un objet tranchant, par exemple. Pour ce faire, comme également visible sur la figure 3A, l'agencement conducteur comportent trois bandes de phase longitudinales C₁ à C₃ entourées sur le dessus d'une bande de terre longitudinale C_{T} et sur le dessous d'une bande de neutre longitudinale C_{N}, ces deux dernières bandes de section en L entourant les trois bandes de phase. Grâce à cette disposition, en cas extrême d'une rupture de la barre par un objet, qui viendrait en contact avec une bande de phase C₁ à C₃, il est obligé de traverser auparavant la bande de terre C_{T} ou la bande de neutre C_{N}, ce qui provoque un court-circuit phase/neutre ou phase/terre. Des agencements de sécurité en amont coupent alors le circuit électrique.

Selon une variante de réalisation plus économique représentée sur la figure 3B, l'agencement conducteur comportent trois bandes de phase longitudinales C₁ à C₃ entourées sur le dessus et d'une premier côté, d'une bande de terre longitudinale C_{T} de section en L et sur le second côté d'une bande de neutre longitudinale C_{N}, cette bande de neutre longitudinale C_{N} étant alignée et parallèle aux bandes de phase. Grâce à cette disposition, en cas extrême d'une rupture de la barre par un objet, qui viendrait en contact avec une bande de phase C₁ à C₃, il est obligé de traverser auparavant la bande de terre C_{T}, ce qui provoque un court-circuit phase/terre ou phase/neutre. Des agencements de sécurité en amont coupent alors le circuit électrique

Un tel dispositif modulaire permet la réalisation d'un ensemble d'alimentation totalement et facilement évolutif destiné à la recharge de batteries électriques de plusieurs véhicules tel que représenté sur la figure 4.

Cet ensemble est constitué d'une pluralité de dispositifs d'alimentation tels que décrit ci-dessus. Plus précisément sur la figure 4, cinq dispositifs d'alimentation 1 à 5 sont représentés. Chaque dispositif d'alimentation est fixé au sol ou équivalent et est adjacent à un autre dispositif d'alimentation et les prolongements perpendiculaires adjacents, par exemple 1D et 2C, de ces dispositifs d'alimentation sont connectés électriquement. Plus précisément, les parties accessibles des bandes conductrices sont électriquement connectées à l'extrémité des prolongements perpendiculaires adjacents au moyen de préférence de liaisons souples.

Une borne d'alimentation commune correspondante non représentée est ensuite installée au-dessus de ces prolongements, par exemple 1 D et 2C, et est connectée mécaniquement au sol ou équivalent. Cette borne est connectée électriquement, de préférence au moyen de liaisons souples, aux bandes conductrices accessibles à l'extrémité de ces prolongements.

Un poteau creux, par exemple 12, est disposé entre les prolongements et la borne, en chapeautant les prolongements et est supporté par le sol ou équivalent. Sa fonction est de protéger mécaniquement et électriquement les liaisons électriques entre prolongements et borne et d'en assurer une étanchéité.

Dispositifs d'alimentation, bornes et poteaux sont fixés indépendamment au sol ou équivalent, afin d'éviter toute transmission de contrainte mécanique entre ces éléments.

Un premier dispositif d'alimentation, ici le dispositif 1, est connecté à des câbles d'entrée C, par connexion de ces câbles C avec l'agencement conducteur de ce premier dispositif d'alimentation 1.

Par ailleurs, ce type de dispositif modulaire permet aisément de réaliser un portique P d'entrée dans le parking au moyen de profilés de connexion mécaniques et électriques, sans nécessité d'interrompre la transmission électrique entre dispositifs d'alimentation.

De préférence, la barre de chaque dispositif d'alimentation 1 à 5 a une longueur comprise entre 2 et 3 mètres, correspondante à une largeur classique de place de parking. De préférence, cette longueur est de l'ordre de 2,50 mètres.

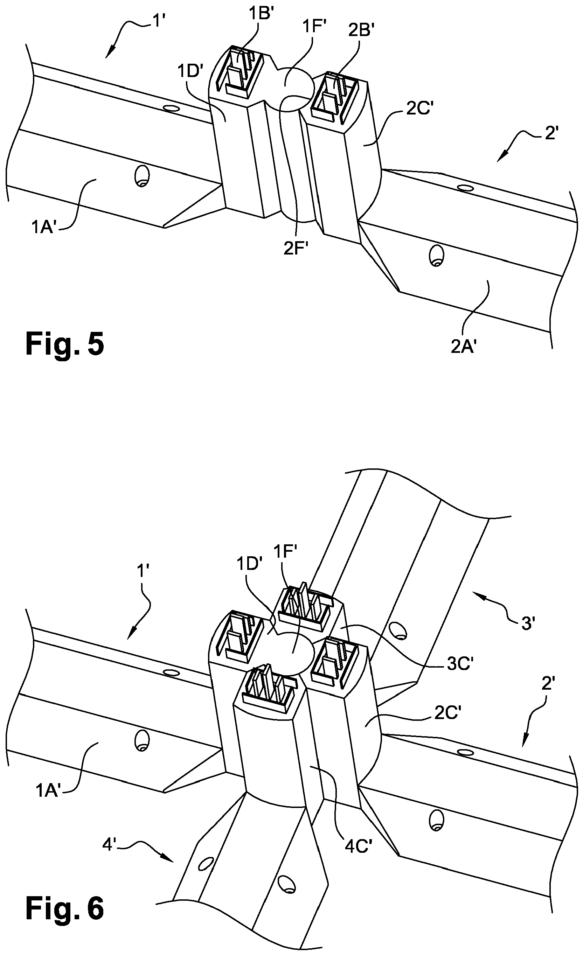

Les figures 5 à 7 illustrent un second mode de réalisation conforme à l'invention.

Ici, au moins un des prolongements 1D' perpendiculaires à la barre 1A' présente un cylindre droit 1F' et au moins un des prolongements 2C' perpendiculaires à la barre 2A' présente une cavité cylindrique droite 2F', le rayon de ce cylindre et de cette cavité étant identique.

Comme représenté sur la figure 5, deux dispositifs d'alimentation 1', 2' peuvent être assemblés avec une rotation possible de ce cylindre 1F' dans cette cavité 2F', ce qui permet un ajustement de la position relative de ces deux dispositifs en fonction du sol sur lequel ils sont installées ou en fonction de la forme souhaitée de l'ensemble d'alimentation.

En particulier, comme illustré sur la figure 6, il est possible d'associer également trois ou quatre dispositifs d'alimentation 1' à 4', dont l'un 1 comporte un prolongement 1D' perpendiculaire à la barre 1A' équipé d'un cylindre droit 1F' et dont les trois autres comporte un prolongement 2C', 3C', 4C' perpendiculaire à la barre 2A', 3A', 4A' équipée d'une cavité cylindrique.

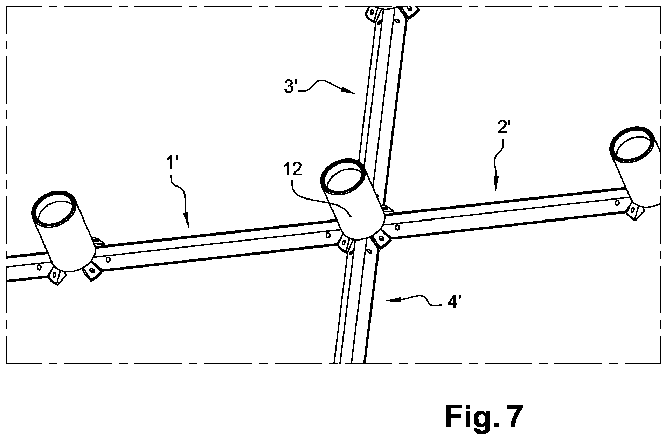

Comme illustrés sur la figure 7, un poteau, par exemple 12, chapeaute les prolongements adjacents et la borne non représentée peut ensuite être installée.

Les figures 8 à 9 illustrent un troisième mode de réalisation conforme à l'invention.

Ici, tous les prolongements 1D" perpendiculaires à chaque barre 1A" présente une cavité cylindrique droite 1F" et deux prolongements perpendiculaires adjacents sont assemblés ensemble par l'intermédiaire d'un élément cylindrique tubulaire de même rayon 13 indépendant et encastré dans chacune des cavités cylindriques droites. Un seul type de dispositifs est ainsi à fabriquer et à assembler.

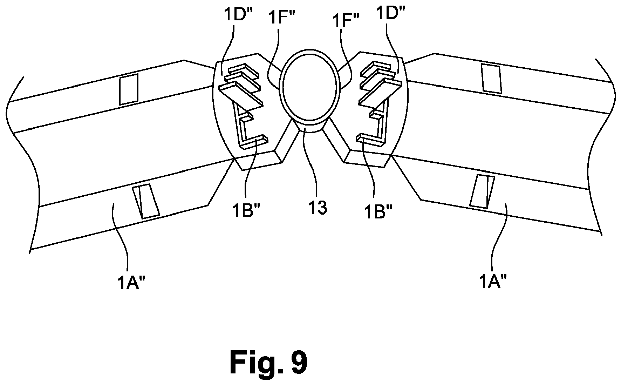

Comme représenté sur la figure 9, deux dispositifs d'alimentation 1" identiques peuvent être assemblés avec une rotation possible autour de l'élément tubulaire 13 grâce aux cavités 1F", ce qui permet un ajustement de la position relative de ces deux dispositifs en fonction du sol sur lequel ils sont installées ou en fonction de la forme souhaitée de l'ensemble d'alimentation.

Comme précédemment, un poteau chapeaute les prolongements adjacents et la borne non représentée peut ensuite être installée.

Sur ce principe, grâce à ces deux modes de réalisation, toutes sortes de maillages sont possibles en fonction du sol sur lequel les dispositifs d'alimentation sont installés ou en fonction de la forme souhaitée de l'ensemble d'alimentation.

## Revendications

1. Ensemble d'alimentation destiné à la recharge de batteries électriques de plusieurs véhicules automobiles électriques comportant une pluralité de dispositifs d'alimentation (1, 2) comportant chacun un dispositif de transmission d'électricité (1A, 2A) destiné à être posé sur le sol avec un agencement conducteur (1 B, 2B) disposé dans ledit dispositif de transmission d'électricité et comportant au moins un poteau supportant une borne d'alimentation et disposé sur lesdits dispositifs de transmission d'électricité **caractérisé en ce que** :
- chaque dit dispositif de transmission d'électricité est constitué d'un ensemble de bandes conductrices (1 B, 2B) enrobées dans une barre en matière isolante électriquement,
- ladite barre présente à chacune de ces extrémités un prolongement perpendiculaire (1C, 1D, 2C, 2D) à l'extrémité duquel lesdites bandes conductrices (1 B, 2B) sont accessibles, ladite barre et ses dits prolongements formant une structure en U dont la barre sensiblement horizontale est la base pourvue d'agencements de fixation au sol et les prolongements verticaux sensiblement verticaux sont les branches,
- lesdites bandes conductrices sont accessibles à l'extrémité libre desdits prolongements,
- chaque dispositif d'alimentation est adjacent à au moins un autre dispositif d'alimentation et les dits prolongements perpendiculaires adjacents de ces dispositifs d'alimentation sont connectés électriquement ensemble et à une borne d'alimentation commune correspondante.

2. Ensemble selon la revendication précédente, **caractérisé en ce que** lesdits dits prolongements perpendiculaires adjacents sont recouverts par ledit poteau (12) chapeautant les dits prolongements et disposé sous ladite borne.

3. Ensemble selon l'une des revendications précédentes, **caractérisé en ce que** ladite barre est de section trapézoïdale, sa plus grande face (S) étant destinée à être disposée sur le sol ou équivalent.

4. Ensemble selon l'une des revendications précédentes, **caractérisé en ce que** ladite barre a une longueur comprise entre 2 et 3 mètres.

5. Ensemble selon l'une des revendications précédentes, **caractérisé en ce qu'**une bande de neutre et/ou de terre (C_{N}, C_{T}) longitudinale enrobée dans ladite barre recouvre lesdites bandes de phases longitudinales (C₁ à C₃).

6. Ensemble selon l'une des revendications précédentes, **caractérisé en ce qu'**au moins un desdits prolongements perpendiculaires présente une cavité cylindrique droite (2F').

7. Ensemble selon l'une des revendications précédentes, **caractérisé en ce qu'**au moins un desdits prolongements perpendiculaires présente un cylindre droit (1F').

8. Ensemble selon les revendications 6 et 7, **caractérisé en ce que** le rayon dudit cylindre et de ladite cavité est identique.

9. Ensemble selon la revendication 6, **caractérisé en ce que** deux dits prolongement perpendiculaires présentant une cavité cylindrique droite (1 F") sont assemblés ensemble par l'intermédiaire d'un élément tubulaire de même rayon (13), encastré dans chacune desdites cavités cylindriques droites.

## Patentansprüche

1. Versorgungseinheit, die ausgelegt ist, um elektrische Batterien von mehreren elektrischen Kraftfahrzeugen aufzuladen, umfassend eine Vielzahl von Versorgungsvorrichtungen (1, 2), die jeweils eine Vorrichtung zur Übertragung von Elektrizität (1A, 1A) umfassen, die ausgelegt ist, um auf dem Boden mit einer Fahreranordnung (1 B, 2B) gestellt zu werden, die in der Vorrichtung zur Übertragung von Strom angeordnet ist, und umfassend mindestens eine Säule, die eine Versorgungsklemme trägt und auf den Vorrichtungen zu Übertragung von Strom angeordnet ist, **dadurch gekennzeichnet, dass**:
- jede Vorrichtung zur Übertragung von Strom aus einer Einheit von leitenden Bändern (1 B, 2B) besteht, die in einer Stange aus elektrisch isolierendem Material einbettet sind,
- wobei die Stange an jedem ihrer Enden eine senkrechte Verlängerung (10, 1 D, 2C, 2D) aufweist, an dessen Ende die leitenden Bänder (1 B, 2B) zugänglich sind, wobei die Stange und ihre Verlängerungen eine U-förmige Struktur bilden, wobei die im Wesentlichen horizontale Stange die Basis ist, die mit Anordnungen zur Befestigung am Boden ausgestattet ist, und die im Wesentlichen vertikalen Verlängerungen die Schenkel sind,
- die leitenden Bänder am freien Ende der Verlängerungen zugänglich sind,
- jede Versorgungsvorrichtung mindestens einer weiteren Versorgungsvorrichtung benachbart ist und die senkrechten Verlängerungen, die diesen Versorgungsvorrichtungen benachbart sind, zusammen und mit einer entsprechenden gemeinsamen Versorgungsklemme verbunden sind.

2. Einheit nach dem vorhergehenden Anspruch, **dadurch gekennzeichnet, dass** die benachbarten senkrechten Verlängerungen von der Säule (12) bedeckt sind, die die Verlängerungen leitet und unter der Klemme angeordnet ist.

3. Einheit nach einem der vorhergehenden Ansprüche, **dadurch gekennzeichnet, dass** die Stange einen trapezförmigen Schnitt aufweist, wobei ihre größte Seite (S) ausgelegt ist, um auf dem Boden oder Gleichwertigem abgelegt zu werden.

4. Einheit nach einem der vorhergehenden Ansprüche, **dadurch gekennzeichnet, dass** die Stange eine Länge zwischen 2 und 3 Metern aufweist.

5. Einheit nach einem der vorhergehenden Ansprüche, **dadurch gekennzeichnet, dass** ein längs gerichtetes neutrales und/oder Erdband (C_{N}, C_{T}), das in der Stange eingebettet ist, die längs gerichteten Phasenbänder (C₁ bis C₃) bedeckt.

6. Einheit nach einem der vorhergehenden Ansprüche, **dadurch gekennzeichnet, dass** mindestens eine der senkrechten Verlängerungen einen geraden zylindrischen Hohlraum (2F') aufweist.

7. Einheit nach einem der vorhergehenden Ansprüche, **dadurch gekennzeichnet, dass** mindestens eine der senkrechten Verlängerungen einen geraden Zylinder (1F') aufweist.

8. Einheit nach Anspruch 6 und 7, **dadurch gekennzeichnet, dass** der Radius des Zylinders und des Hohlraums identisch sind.

9. Einheit nach Anspruch 6, **dadurch gekennzeichnet, dass** zwei der senkrechten Verlängerungen, die einen rechten zylindrischen Hohlraum (1 F") aufweisen, zusammen mit Hilfe eines rohrförmigen Elements mit dem gleichen Radius (13) verbunden sind, der in jeden der rechten zylindrischen Hohlräume eingelassen ist.

## Claims

1. A power supply assembly intended to recharge electric batteries of several electric motor vehicles including a plurality of power supply devices (1, 2) each including an electricity transmission device (1A, 2A) intended to be placed on the ground with a conducting arrangement (1 B, 2B) positioned in said electricity transmission device and including at least one post supporting a power supply terminal and positioned on said electricity transmission devices, **characterized in that**:
- each said electricity transmission device is made up of a set of conductive strips (1 B, 2B) coated in a bar of electrically insulating material,
- said bar has, at each of these ends, a perpendicular extension (1C, 1D, 2C, 2D), at the end of which the conducting strips (1 B, 2B) are accessible, said bar and its said extensions forming a U-shaped structure whereof the substantially horizontal bar is the base provided with arrangements for fastening to the ground and the substantially vertical extensions are the branches,
- said conducting strips being accessible at the free end of said extensions,
- each power supply device is adjacent to at least one other power supply device and said adjacent perpendicular extensions of these power supply devices are electrically connected to one another and to a corresponding shared power supply terminal.

2. The assembly according to the preceding claim, **characterized in that** said adjacent perpendicular extensions are covered by said post (12) capping said extensions and positioned below said terminal.

3. The assembly according to one of the preceding claims, **characterized in that** said bar has a trapezoidal section, its largest face (S) being intended to be positioned on the ground or the like.

4. The assembly according to one of the preceding claims, **characterized in that** said bar has a length comprised between 2 and 3 meters.

5. The assembly according to one of the preceding claims, **characterized in that** a longitudinal neutral and/or ground strip (C_{N}, C_{T}) coated in said bar covers said longitudinal phase strips (C₁ to C₃).

6. The assembly according to one of the preceding claims, **characterized in that** at least one of said perpendicular extensions has a straight cylindrical cavity (2F').

7. The assembly according to one of the preceding claims, **characterized in that** at least one of said perpendicular extensions has a straight cylinder (1 F').

8. The assembly according to claims 6 and 7, **characterized in that** the radius of said cylinder and said cavity is identical.

9. The assembly according to claim 6, **characterized in that** two said perpendicular extensions having a straight cylindrical cavity (1 F") are assembled to one another via a tubular element of equal radius (13), embedded in each of said straight cylindrical cavities.
